# EUROPEAN PATENT APPLICATION

(11) **EP 4 650 817 A1**
(43) Date of publication of application: **19.11.2025**
(21) Application number: 24176479.4
(22) Date of filing: 17.05.2024
(51) Int. Cl.: G01S 7/40, G01S 7/497

(54) **CLEANING MECHANISM BASED VERIFICATION OF AUTOMOTIVE SENSOR DATA**

(71) Applicant: Bayerische Motoren Werke Aktiengesellschaft, 80809 München (DE)
(72) Inventor: Otsuka, Kohei, 85774 Unterföhring (DE)

(57) **Abstract**

The present disclosure relates to verifying automotive sensor data captured by at least one automotive sensor of a vehicle, which is configured to provide environmental awareness enabling one or more driving features of the vehicle. To verify the automotive sensor data, a cleaning mechanism included in the automotive sensor is activated, which is configured to cause the at least one automotive sensor to capture cleaning sensor data. The automotive sensor data captured during activation of the cleaning mechanism are then compared with the cleaning sensor data. Finally, the automotive sensor data captured by the at least one automotive sensor are verified if the automotive sensor data captured during activation of the cleaning mechanism correspond to the cleaning sensor data.

## Description

### TECHNICAL FIELD

The invention generally relates to verifying automotive sensor data in a vehicle and more precisely to verifying automotive sensor data based on expected automotive sensor data.

### BACKGROUND

Modern vehicles are configured to provide one or more driving features, which may provide some degree of active safety or some level of driving automation. To enable these driving features, vehicles include automotive sensors, which capture automotive sensor data indicative of a respective driving environment. Given the connected nature of modern vehicles, risks to the integrity of the automotive sensor data may arise from simple sensor malfunctions to hacking attacks. Accordingly, the integrity of the automotive sensor data captured by the automotive sensors needs to be ensured in order to reliably perform the one or more driving features. However, in view of the connected nature of vehicles, the integrity of the automotive sensor data needs to be ensured in a manner having a reduced hacking potential.

Therefore, it is an objective of the present disclosure to ensure the integrity of automotive sensor data in a manner having a reduced manipulation potential.

### SUMMARY OF THE INVENTION

To achieve this objective, the present disclosure provides a method for verifying automotive sensor data captured by at least one automotive sensor of a vehicle. The at least one automotive sensor is configured to provide environmental awareness enabling one or more driving features of the vehicle. The method comprises activating a cleaning mechanism included in the at least one automotive sensor, wherein the cleaning mechanism is configured to cause the at least one automotive sensor to capture cleaning sensor data. The method further comprises comparing the automotive sensor data captured during activation of the cleaning mechanism with the cleaning sensor data. Finally, the method comprises verifying the automotive sensor data captured by the at least one automotive sensor if the automotive sensor data captured during activation of the cleaning mechanism correspond to the cleaning sensor data.

The present disclosure further provides an automotive control unit comprising at least one processing unit and a memory coupled to the at least one processing unit and configured to store machine-readable instructions. The machine-readable instructions cause the at least one processing unit to activate a cleaning mechanism included in at least one automotive sensor. The cleaning mechanism is configured to cause the at least one automotive sensor to capture cleaning sensor data. The machine-readable instructions further cause the at least one processing unit to compare the automotive sensor data captured during activation of the cleaning mechanism with the cleaning sensor data. The machine-readable instructions further cause the at least one processing unit to verify the automotive sensor data captured by the at least one automotive sensor if the automotive sensor data captured during activation of the cleaning mechanism correspond to the cleaning sensor data.

The present disclosure further provides a vehicle comprising a plurality of sensors, and the automotive control unit.

### BRIEF DESCRIPTION OF THE DRAWINGS

Examples of the present disclosure will be described with reference to the following appended drawings, in which like reference signs refer to like components.
FIG. 1 provides a flowchart of a method for verifying automotive sensor data captured by at least one automotive sensor of a vehicle according to examples of the present disclosure.
FIG. 2 illustrates a vehicle including a plurality of automotive sensors according to examples of the present disclosure.
FIG. 3 illustrates an automotive control unit according to examples of the present disclosure.

It should be understood that the above-identified drawings are in no way meant to limit the present disclosure. Rather, these drawings are provided to assist in understanding the present disclosure. The person skilled in the art will readily understand that aspects of the present invention shown in one drawing may be combined with aspects in another drawing or may be omitted without departing from the scope of the present disclosure.

### DETAILED DESCRIPTION

The present disclosure generally provides a method, an automotive control unit and a vehicle configured to verify automotive sensor data captured by at least one automotive sensor of a vehicle. The at least one automotive sensor includes a cleaning mechanism, which is configured to remove dirt or any other type of obstruction from a capturing area of the at least one automotive sensor, e.g. by spraying water, a cleaning solution, air or any combination thereof onto the capturing area. Each time the cleaning mechanism removes dirt or any other type of obstruction from the cleaning area, the at least one automotive sensor captures automotive sensor data. Since the cleaning mechanism cleans the capturing area of the at least one automotive sensor in a substantially similar pattern each time it is activated, the automotive sensor data captured during activation of the cleaning mechanism are substantially similar each time the cleaning mechanism is activated. In other words, upon activation of the cleaning mechanism specific automotive sensor data, also referred to as cleaning sensor data, are expected to be captured by the at least one automotive sensor. The present disclosure leverages this fact to verify the automotive sensor data captured by the at least one automotive sensor and compares the automotive sensor data captured during activation of the cleaning mechanism with the expected cleaning sensor data in order to verify the automotive sensor data captured by the at least one automotive sensor. If the automotive sensor has been manipulated, e.g. due to damage received during operation of the vehicle or due to hacking, such manipulation can be detected based on the activation of the cleaning mechanism and a detection of a deviation of resulting automotive data from the cleaning sensor data. That is, if the at least one automotive sensor has been manipulated, the automotive sensor data captured during activation of the cleaning mechanism do not correspond to the cleaning sensor data.

The manipulation detection and thereby the verification of the automotive sensor data is based on the fact that the cleaning automotive sensor data is unknown to a threat actor. In addition, by basing the automotive sensor verification based on automotive sensor data caused to be captured by the cleaning mechanism already employed in the vehicle, the automotive sensor data verification according to the present disclosure leverages features of the vehicle which are already present.

While the verification may be performed for only one sensor, it may also be performed for multiple automotive sensors, increasing the robustness of the automotive sensor verification since a threat actor may not know multiple sets of cleaning sensor data.

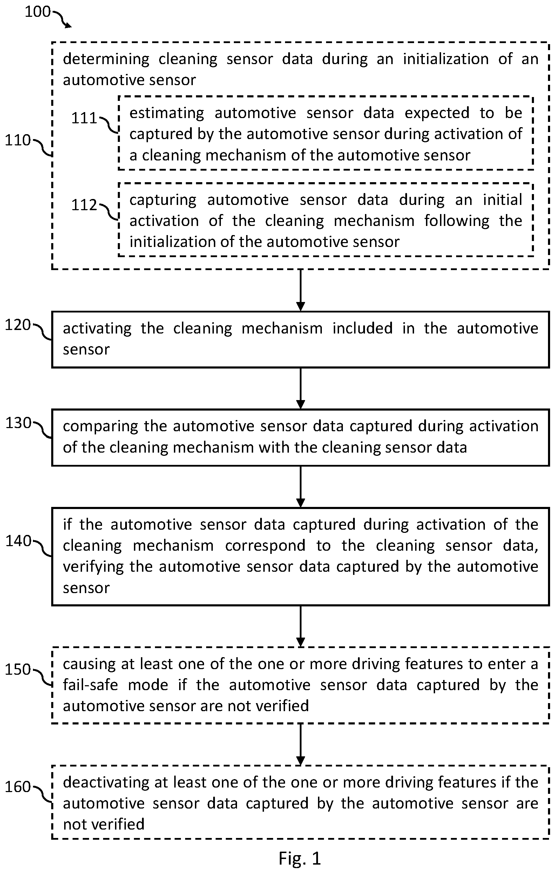

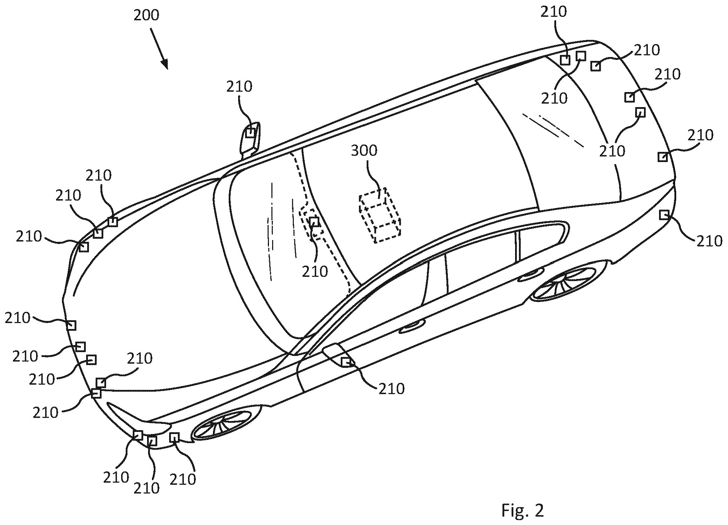

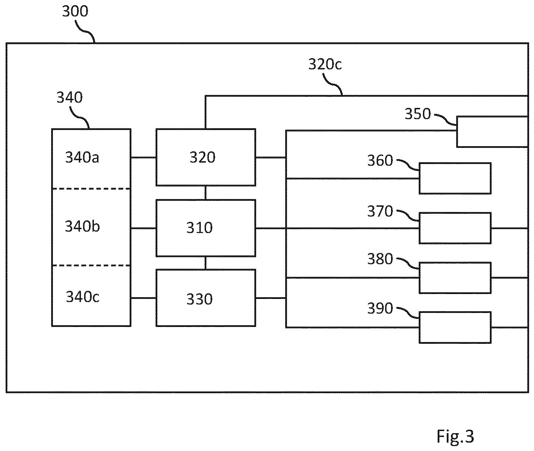

This general concept will now be explained with reference to the appended drawings, with Fig. 1 providing a flowchart of the method for verifying automotive sensor data captured by at least one automotive sensor of a vehicle. Fig. 2 illustrates the vehicle including the plurality of automotive sensors and the automotive control unit. Finally, Fig. 3 illustrates an example of the automotive control unit in more detail.

It will be understood that dashed boxes in Fig. 1 illustrate optional steps of method 100.

Method 100 is configured to verify automotive sensor data captured by at least one automotive sensor of a vehicle.

Turning briefly to Fig. 2, vehicle 200 and more generally the expression vehicle in the context of the present disclosure, refers to any kind of motor vehicle configured to transport people and/or freight. The motor of vehicle 200 may be any kind of motor, such as an electric motor or an internal combustion engine. Vehicle 200 may e.g. be a passenger vehicle as shown in Fig. 2. It will however be understood that vehicle 200 may also be a bus, a truck or any other kind of vehicle including one or more automotive sensors 210 and an automotive control unit 300 enabling vehicle 200 to perform one or more driving features.

The one or more driving features may include at least one of a driving automation system feature and an active safety system feature. In other words, driving feature in the context of the present disclosure may refer to features of active safety systems as well as to features enabling some level of driving automation.

In the context of the present disclosure, active safety systems and features thereof refer to sensing and monitoring conditions inside and outside vehicle 310 for the purpose of identifying perceived present and potential dangers to vehicle 310, occupants, and/or other road users, and automatically intervene to help avoid or mitigate potential collisions via various methods, including alerts to the driver, vehicle system adjustments, and/or active control of the vehicle subsystems, such as brakes, throttle, suspension, etc., as defined in SAE standard J3016.

Further, in the context of the present disclosure, driving automation system feature refers to the performance by hardware/software systems of part or all of the dynamic driving task (DDT) on a sustained basis within a particular operational design domain (ODD), if applicable. In other words, driving automation system feature denotes a feature which enables vehicle 210 to provide some level of driving automation as defined in the driving automation taxonomy of SAE standard J3016.

The DDT in the context of the present disclosure includes all real-time operational and tactical functions required to operate vehicle 300 in on-road traffic, excluding strategic functions such as trip scheduling and selection of destinations and waypoints.

ODD in the context of the present disclosure refers to the operating conditions under which a given driving automation system feature is specifically designed to function, including, but not limited to, environmental, geographical, and time-of-day restrictions, and/or the requisite presence or absence of certain traffic or roadway characteristics.

The one or more automotive sensors 210 are configured to provide environmental awareness enabling the one or more driving features. Accordingly, the automotive sensor data provide environmental awareness to automotive control unit 300 and thereby to vehicle 200 in order to enable the one or more driving features. For example, the automotive sensor data captured by the one or more sensors 210 may provide vehicle 200 with information on the position and size of other vehicles, road surface markings or traffic signs. To this end, the one or more sensors 210 may be radar sensors, which may be configured to emit radio waves in order to determine a distance, an angle and a velocity of objects around the vehicle based on the reflected radio waves. The one or more sensors 210 may be light detection and ranging (LIDAR) sensors, which are configured to emit laser beams in order to determine a distance, an angle and a velocity of objects around vehicle 200 based on the reflected laser beams. The one or more sensors 210 may be automotive cameras, which capture video data of the environment of the vehicle. The one or more sensors 210 may be thermographic cameras, which capture images of the environment of vehicle 200 based on infrared radiation. It will be understood that LIDAR sensors, radar sensors or automotive cameras are merely provided as examples of sensor types of the one or more sensors 210. For example, the one or more sensors 210 may also be ultrasonic sensors. The one or more sensors 210 may be global navigation satellite system (GNSS) sensors configured to receive positional data, such as satellite signals, for determining the position of vehicle 200. More generally, the one or more sensors 210 may be any type of sensor capable of capturing automotive sensor data indicative of the environment of vehicle 200. Further, the one or more sensors 210 may additionally be any type of sensor capable of capturing odometry data, such as speed and acceleration, of vehicle 200. This capturing capability may be integrated into the sensor types discussed above or may be provided by dedicated motion sensors. It will further be understood that the one or more sensors 210 may include multiple sensors of various types of sensors. Further, the one or more sensors 210 of the same type may exhibit different properties, e.g. by being configured to capture sensor data at different ranges, such as a close range, a middle range and a far range. For example, vehicle 200 may include three close range radar sensors each at a front and a back of vehicle 200, a middle range to far range radar sensor at the back of vehicle 300, a LIDAR sensor at the front of vehicle 200, a rear-facing camera at the back of vehicle 300, a front-facing camera at the front of the vehicle, a front-facing camera at the rear-view mirror and a rear-facing close range to middle range radar sensor in each door-mounted outer rear view mirror. It will be understood that vehicle 200 may include more or fewer automotive sensors than shown in Fig. 2 and discussed in the above example.

At least some of the one or more automotive sensors 210 include a cleaning mechanism. That is, vehicle 200 may include automotive sensors 210 with and without a cleaning mechanism, depending on the type of automotive sensor and the need for cleaning a capturing area of a respective automotive sensor. However, method 100 is only applicable to automotive sensors 210 including a cleaning mechanism. In the context of the present disclosure, a given automotive sensor 210 is considered to include a cleaning mechanism if a cleaning mechanism is provided within vehicle 200 for the purpose of cleaning the given automotive sensor, e.g. by integrating the cleaning mechanism with the automotive sensor or by providing the cleaning mechanism as a sperate entity adjacent to the given automotive sensor or by arranging the cleaning mechanism in any other way enabling the cleaning mechanism to clean the given automotive sensor. It will thus be understood that an automotive sensor 210 in the context of the present disclosure is considered to include a cleaning mechanism if the cleaning mechanism is provided and arranged in vehicle 200 in a manner enabling cleaning of the automotive sensor 210 regardless of the level of physical integration of the cleaning mechanism and the automotive sensor 210.

Each cleaning mechanism is configured to remove dirt or any other type of obstruction from a capturing area of the corresponding automotive sensor 210, e.g. by spraying water, a cleaning solution, air or any combination thereof onto the capturing area. The removal of dirt or any other type of obstruction causes the corresponding automotive sensor 210 to capture automotive sensor data, which are substantially the same each time the cleaning mechanism is activated, as long as the corresponding automotive sensor 210 has not been manipulated. The automotive sensor data captured during activation of the cleaning mechanism in an unmanipulated state of the corresponding automotive sensor 210, which are thus expected to be captured each time the cleaning mechanism is activated, are referred to in the following as cleaning sensor data. Accordingly, by being configured to remove dirt or any other type of obstruction from the capturing area of the corresponding automotive sensor 210, each cleaning mechanism is also configured to cause the corresponding automotive sensor 210 to capture cleaning sensor data.

In step 110, method 100 may determine the cleaning sensor data during an initialization of least one automotive sensor 210. Thereby, method 100 may obtain the cleaning sensor data of a given automotive sensor 210 for subsequent use by method 100 in the following steps of method 100 when the given automotive sensor 210 is initialized, e.g. during at least one of an installation and a maintenance of the given automotive sensor 210 and/ or the corresponding cleaning mechanism. To determine the cleaning sensor data, method 100 may, as part of step 110, estimate in a step 111 automotive sensor data expected to be captured by the given automotive sensor during activation of the cleaning mechanism. The estimation may be performed using an algorithm which may estimate the cleaning sensor data based on the type of cleaning used, e.g. cleaning-liquid or air based cleaning, as well as based on the type of automotive sensor. Alternatively, method 100 may, as part of step 110, capture in a step 112 automotive sensor data during an initial activation of the cleaning mechanism following the initialization of the corresponding automotive sensor 210, which are then stored as the cleaning sensor data.

Instead of performing steps 110 to 112 to determine the cleaning sensor data, the cleaning sensor data may also be provided by an entity, such as the manufacturer of the vehicle, the automotive sensor or the cleaning mechanism, in order enable the subsequently discussed verification of automotive sensor data.

In step 120, method 100 activates the cleaning mechanism included in the corresponding automotive sensor 210. The activation of the cleaning mechanism may be performed solely for the purpose of verifying the automotive sensor data captured by the corresponding automotive sensor 210 or may be also performed because cleaning of the corresponding automotive sensor 210 has been deemed necessary.

In step 130, method 100 compares the automotive sensor data captured by the corresponding automotive sensor 210 during activation of the cleaning mechanism with the cleaning sensor data. The automotive sensor data captured by the corresponding automotive sensor 210 and the cleaning sensor data may be compared bytewise or may be compared based on hash values calculated for both the corresponding automotive sensor 210 and the cleaning sensor data or may be compared in any way suitable to compare the two sets of data, e.g. in view of their structure, their size or any other parameter.

The comparison may take into account that even in the absence of any manipulation of a given automotive sensor 210 the automotive sensor data captured during activation of the cleaning mechanism may not be identical to the cleaning sensor data. This may be due to capturing characteristics of the given automotive sensor 210 or due to the cleaning mechanism applying a cleaning liquid, such as air or water, in slightly different ways during each activation. Accordingly, the comparison in step 140 may consider the automotive sensor data captured by the corresponding automotive sensor 210 during activation of the cleaning mechanism and the cleaning sensor data to correspond to one another even if they deviate by a certain margin from one another, as e.g. defined by a similarity threshold. Such a similarity threshold may define that at a data similarity of e.g. 70% or 80% or any other suitable percentage the automotive sensor data captured during activation of the cleaning mechanism and the cleaning sensor data may be considered to correspond to one another.

In step 140, method 100 verifies the automotive sensor data captured by the corresponding automotive sensor 210 if the automotive sensor data captured during activation of the cleaning mechanism correspond to the cleaning sensor data, as determined in step 130. Accordingly, verification in the context of the present disclosure is to be understood as determining that the corresponding automotive sensor 210 captures automotive sensor data as expected, i.e. captures automotive sensor data without data deviations, which may be due to manipulations, e.g. by a threat actor or due to sensor degradation. Since the verification is based on the above-discussed comparison of automotive sensor data captured during activation of the cleaning mechanism with the cleaning sensor data, the determination to verify the automotive sensor data and thus that the automotive sensor data are not manipulated is based on a point of reference unknown to a potential threat actor. Consequently, the verification based on the cleaning sensor data enables a secure and robust way of verifying automotive sensor data of a given automotive sensor 210.

If method 100 determines in step 140 that the automotive sensor data are not verified, method 100 may perform any one of step 150 and 160 with regard to any one of the driving features of vehicle 200. That is, method 100 may take different measures, as e.g. outlined in steps 150 and 160, for each driving feature of vehicle 200 if the automotive sensor data are not verified.

In step 150, method 100 may cause at least one of the one or more driving features to enter a fail-safe mode if the automotive sensor data captured by a given automotive sensor 210 are not verified. Thereby, method 100 may ensure continued performance of the given driving feature while at the same time ensuring the safety of vehicle 200 and of any occupants of vehicle 200.

In step 160, method 100 may deactivate at least one of the one or more driving features if the automotive sensor data captured by a given automotive sensor 210 are not verified. The decision of method 100 to deactivate a driving feature in response to not verifying the automotive sensor data may be based on the fact that in view of the suspected manipulation of the automotive sensor as determined based on the cleaning sensor data safe performance of the given driving feature may not be ensured.

As discussed above and as illustrated in Fig. 2, vehicle 200 may include a plurality of automotive sensors 210. Accordingly, it will be understood that method 100 may be performed for automotive sensor data captured by at least two automotive sensors 210 of the plurality of automotive sensors 210. By performing method 100 for more than one automotive sensor 210, the security and robustness of the verification of the automotive sensor data may be further increased, as the verification in such a case is based on multiple sets of cleaning sensor data and thus on multiple points of reference.

In summary, method 100 verifies automotive sensor data based on automotive sensor data expected to be captured upon activation of a cleaning mechanism of an automotive sensor. This approach to verifying automotive sensor data ensures secure and robust verification of automotive sensor data as the automotive sensor data expected to be captured upon activation of a cleaning mechanism of an automotive sensor is unknown outside of a given vehicle.

Fig. 3 shows automotive control unit 300 configured to perform method 100. Automotive control unit 300 may include a processor 310, a graphics processing unit (GPU) 320, automotive processing system 330, a memory 340, a removable storage 350, a storage 360, a cellular interface 370, a global navigation satellite system (GNSS) interface 380 and a communication interface 390.

Processor 310 may be any kind of single-core or multi-core processing unit employing a reduced instruction set (RISC) or a complex instruction set (CISC). Exemplary RISC processing units include ARM based cores or RISC V based cores. Exemplary CISC processing units include x86 based cores or x86-64 based cores. Processor 310 may perform instructions causing automotive control unit 300 to perform method 100. Processor 310 may be directly coupled to any of the components of automotive control unit 300 or may be directly coupled to memory 330, GPU 320 and a device bus.

GPU 320 may be any kind of processing unit optimized for processing graphics related instructions or more generally for parallel processing of instructions. As such, GPU 320 may be configured to generate a display of information, such as driving feature information or telemetry data, to a driver of the vehicle, e.g. via a head-up display (HUD) or a display arranged within the view of the driver. GPU 320 may be coupled to the HUD and/or the display via connection 320C. GPU 320 may further perform at least a part of method 100 to enable fast parallel processing of instructions relating to method 100. It should be noted that in some embodiments, processor 310 may determine that GPU 320 need not perform instructions relating to method 100. GPU 320 may be directly coupled to any of the components of automotive control unit 300 or may be directly coupled to processor 310 and memory 330. In some embodiments, GPU 320 may also be coupled to the device bus.

Automotive processing system 330 may be any kind of system-on chip configured to provide trillions of operations per second (TOPS) in order to enable automotive control unit 300 to implement one or more driving features while driving. Automotive processing system 330 may interface only with processor 310 or may interface with other devices via the system bus. Automotive processing system 330 may for example perform the instructions related to the one or more automotive sensor data processing modules and to the one or more vehicle control modules.

Memory 340 may be any kind of fast storage enabling processor 310, GPU 320 and automotive processing system 330 to store instructions for fast retrieval during processing of instructions as well as to cache and buffer data. Memory 340 may be a unified memory coupled to processor 310 and GPU 320 and automotive processing system 330 in order to enable allocation of memory 340 to processor 310, GPU 320 and automotive processing system 330 as needed. Alternatively, processor 310, GPU 320 and automotive processing system 330 may be coupled to separate processor memory 340a, GPU memory 340b and automotive processing system memory 340c.

Removable storage 350 may be a storage device which can be removably coupled with automotive control unit 300. Examples include a digital versatile disc (DVD), a compact disc (CD), a Universal Serial Bus (USB) storage device, such as an external SSD, or a magnetic tape. It should be noted that removable storage 350 may store data, such as instructions of method 200, automotive sensor data, intermediate data and/or vehicle control data or may be omitted.

Storage 360 may be a storage device enabling storage of program instructions and other data. For example, storage 360 may be a hard disk drive (HDD), a solid state disk (SSD) or some other type of non-volatile memory. Storage 360 may for example store the instructions of method 100, automotive sensor data, intermediate data and/or vehicle control data.

Removable Storage 350 and storage 360 may be coupled to processor 310 via the system bus. The system bus may be any kind of bus system enabling processor 310 and optionally GPU 320 as well as automotive processing system 330 to communicate with the other devices of automotive control unit 300. Bus 340 may for example be a Peripheral Component Interconnect express (PCIe) bus or a Serial AT Attachment (SATA) bus.

Cellular interface 370 may be any kind of interface enabling automotive control unit 300 to communicate via a cellular network, such as a 4G network or a 5G network.

GNSS interface 380 may be any kind of interface enabling automotive control unit 300 to receive positional data provided by a satellite network, such as the Global Positioning System (GPS), the Global Navigation Satellite System (GLONASS) or Galileo. The positional data may be one of the types of automotive sensor data in the context of the present disclosure.

Communications interface 390 may enable automotive control unit 300 to interface with external devices, either directly or via network. Communications interface 380 may for example enable automotive control unit 300 to couple to a wired or wireless network, such as Ethernet, Wifi, a Controller Area Network (CAN) bus or any bus system appropriate in vehicles. For example, automotive control unit 300 may be coupled to the one or more automotive sensors 310 to receive automotive sensor data.

Automotive control unit 300 may be integrated with vehicle 200, e.g. beneath the cabin, under the dashboard or in the trunk of vehicle 200.

The invention may further be illustrated by the following examples.

In an example, a method for verifying automotive sensor data captured by at least one automotive sensor of a vehicle with the at least one automotive sensor being configured to provide environmental awareness enabling one or more driving features of the vehicle comprises activating a cleaning mechanism included in the at least one automotive sensor, wherein the cleaning mechanism is configured to cause the at least one automotive sensor to capture cleaning sensor data, comparing the automotive sensor data captured during activation of the cleaning mechanism with the cleaning sensor data and, if the automotive sensor data captured during activation of the cleaning mechanism correspond to the cleaning sensor data, verifying the automotive sensor data captured by the at least one automotive sensor.

The example method may further comprise causing at least one of the one or more driving features to enter a fail-safe mode if the automotive sensor data captured by the at least one automotive sensor are not verified.

The example method may further comprise deactivating at least one of the one or more driving features if the automotive sensor data captured by the at least one automotive sensor are not verified.

The example method may further comprise determining the cleaning sensor data during an initialization of the at least one automotive sensor.

In the example method, the determining the cleaning sensor data may comprise estimating automotive sensor data expected to be captured by the at least one automotive sensor during activation of the cleaning mechanism.

In the example method, the determining the cleaning sensor data may comprise capturing automotive sensor data during an initial activation of the cleaning mechanism following the initialization of the at least one automotive sensor.

In the example method, the initialization may correspond to at least one of an installation and a maintenance of the at least one automotive sensor.

In the example method, the one or more driving features may include at least one of a driving automation system feature and an active safety system feature.

In the example method, the vehicle may comprise a plurality of automotive sensors, and the example method may be performed for automotive sensor data captured by at least two automotive sensors of the plurality of automotive sensors.

In an example, an automotive control unit comprises at least one processing unit and a memory coupled to the at least one processing unit and configured to store machine-readable instructions. The machine-readable instructions cause the at least one processing unit to activate a cleaning mechanism included in at least one automotive sensor, wherein the cleaning mechanism is configured to cause the at least one automotive sensor to capture cleaning sensor data, compare the automotive sensor data captured during activation of the cleaning mechanism with the cleaning sensor data and, if the automotive sensor data captured during activation of the cleaning mechanism correspond to the cleaning sensor data, verify the automotive sensor data captured by the at least one automotive sensor.

In the example automotive control unit, the machine-readable instructions may further cause the at least one processing unit to perform any one of the preceding example methods.

In an example, a vehicle comprises a plurality of automotive sensors, and the preceding example automotive control unit.

The preceding description has been provided to illustrate cleaning mechanism based verification of automotive sensor data. It should be understood that the description is in no way meant to limit the scope of the present disclosure to the precise embodiments discussed throughout the description. Rather, the person skilled in the art will be aware that the examples of the present disclosure may be combined, modified or condensed without departing from the scope of the present disclosure as defined by the following claims.

### List of Reference Signs

- 100: method
- 110-160: method steps
- 200: vehicle
- 210: automotive sensor
- 300: automotive control unit
- 310: CPU
- 320: GPU
- 320c: connection
- 330: automotive processing system
- 340: memory
- 350: removable storage
- 360: storage
- 370: cellular interface
- 380: GNSS interface
- 390: communications interface

## Claims

1. Method (100) for verifying automotive sensor data captured by at least one automotive sensor (210) of a vehicle (200), the at least one automotive sensor (210) being configured to provide environmental awareness enabling one or more driving features of the vehicle (210), the method (100) comprising:
activating (120) a cleaning mechanism included in the at least one automotive sensor (210), wherein the cleaning mechanism is configured to cause the at least one automotive sensor (210) to capture cleaning sensor data;
comparing (130) the automotive sensor data captured during activation of the cleaning mechanism with the cleaning sensor data; and
if the automotive sensor data captured during activation of the cleaning mechanism correspond to the cleaning sensor data, verifying (140) the automotive sensor data captured by the at least one automotive sensor.

2. The method (100) of claim 1, wherein the method (100) further comprises causing (150) at least one of the one or more driving features to enter a fail-safe mode if the automotive sensor data captured by the at least one automotive sensor (210) are not verified.

3. The method (100) of any one of the preceding claims, wherein the method (100) further comprises deactivating (160) at least one of the one or more driving features if the automotive sensor data captured by the at least one automotive sensor (210) are not verified.

4. The method (100) of any one of the preceding claims, wherein the method (100) further comprises determining (110) the cleaning sensor data during an initialization of the at least one automotive sensor (210).

5. The method (100) of claim 4, wherein the determining (110) the cleaning sensor data comprises estimating (111) automotive sensor data expected to be captured by the at least one automotive sensor (210) during activation of the cleaning mechanism.

6. The method (100) of claim 4, wherein the determining (110) the cleaning sensor data comprises capturing (112) automotive sensor data during an initial activation of the cleaning mechanism following the initialization of the at least one automotive sensor (210).

7. The method (100) of any one of claims 4 to 6, wherein the initialization corresponds to at least one of an installation and a maintenance of the at least one automotive sensor (210).

8. The method (100) of any one of the preceding claims, wherein the one or more driving features include at least one of a driving automation system feature and an active safety system feature.

9. The method (100) of any one of the preceding claims, wherein:
the vehicle (200) comprises a plurality of automotive sensors (210), and
the method (100) is performed for automotive sensor data captured by at least two automotive sensors (210) of the plurality of automotive sensors (210).

10. An automotive control unit (300), comprising:
at least one processing unit (310, 320, 330); and
a memory (350, 360) coupled to the at least one processing unit (310, 320, 330) and configured to store machine-readable instructions,
wherein the machine-readable instructions cause the at least one processing unit (310, 320, 330) to:
activate a cleaning mechanism included in at least one automotive sensor (210), wherein the cleaning mechanism is configured to cause the at least one automotive sensor (210) to capture cleaning sensor data;
compare the automotive sensor data captured during activation of the cleaning mechanism with the cleaning sensor data; and
if the automotive sensor data captured during activation of the cleaning mechanism correspond to the cleaning sensor data, verify the automotive sensor data captured by the at least one automotive sensor (210).

11. The automotive control unit (300) of claim 10, wherein the machine-readable instructions further cause the at least one processing unit (310, 320, 330) to perform the method (100) of any one of claims 2 to 9.

12. A vehicle (200) comprising a plurality of automotive sensors (210) and the automotive control unit (300) of any one of claims 10 and 11.
